# EUROPEAN PATENT APPLICATION

(11) **EP 4 358 179 A1**
(43) Date of publication of application: **24.04.2024**
(21) Application number: 22918303.3
(22) Date of filing: 24.11.2022
(51) Int. Cl.: H01M 4/134

(54) **SILICON NEGATIVE ELECTRODE MATERIAL, AND SECONDARY BATTERY, BATTERY MODULE, BATTERY PACK AND ELECTRIC DEVICE COMPRISING SAME**

(30) Priority: 04.01.2022 CN 202210004942
(71) Applicant: Contemporary Amperex Technology Co., Limited, Ningde City, Fujian 352100 (CN)
(72) Inventor: WU, Yale, Ningde City, Fujian 352100 (CN); ZHANG, Ming, Ningde City, Fujian 352100 (CN); YANG, Jimin, Ningde City, Fujian 352100 (CN)
(74) Representative: Kraus & Lederer PartGmbB
(86) International application number: PCT/CN2022/133924
(87) International publication number: WO 2023/130851

(57) **Abstract**

The present application provides a silicon negative electrode material, which is characterized by comprising silicon particles and carbon nanotubes grown on the surface of the silicon particles, wherein the carbon nanotubes comprise fluffy carbon nanotubes and intertwined filamentary carbon nanotubes, and the silicon particles are wrapped by the fluffy carbon nanotubes and the filamentary carbon nanotubes. Further provided is a method for preparing the silicon negative electrode material.

## Description

### Technical Field

The present application relates to the technical field of lithium batteries, and in particular to a silicon negative electrode material, a secondary battery, a battery module, a battery pack and an electrical apparatus.

### Background Art

In recent years, with the increasingly wide use of lithium-ion batteries, lithium-ion batteries are widely used in energy storage power systems such as water power, thermal power, wind power and solar power stations, as well as electric tools, electric bicycles, electric motorcycles, electric vehicles, military equipment, aerospace and other fields. At present, negative electrode materials for lithium-ion batteries mainly use graphite-type carbon negative electrode materials, which have excellent conductivity and high cycling stability. However, their theoretical specific capacity is low and cannot meet requirements for development of batteries with high energy density. As the market demand for energy density of lithium-ion batteries increases, searching for negative electrode materials with high specific capacity that can be substituted for carbon has become an important development direction.

Silicon material is considered to be the most promising future negative electrode material for lithium-ion batteries due to its high theoretical specific capacity and abundant resources. However, the silicon material has many shortcomings as a negative electrode material for lithium-ion batteries: firstly, as a semiconductor material, silicon has a low conductivity; secondly, during charging and discharging, with intercalation and deintercalation of lithium ions, the silicon material has a great change in volume. Therefore, the existing silicon negative electrode material still needs to be improved.

### Summary of the Invention

The present application is made in view of the above subject, and its objective is to provide a silicon negative electrode material and a method for preparing the same, enabling the silicon negative electrode material to have high conductivity and low volume expansion rate, thereby improving cycling performance of a corresponding secondary battery.

In order to achieve the above objective, a first aspect of the present application provides a silicon negative electrode material, which is characterized by comprising silicon particles and carbon nanotubes grown on the surface of the silicon particles, where the carbon nanotubes comprise fluffy carbon nanotubes and intertwined filamentary carbon nanotubes, and the silicon particles are wrapped by the fluffy carbon nanotubes and the filamentary carbon nanotubes.

Thus, in the present application, volume expansion of the silicon negative electrode material is limited and conductivity of the silicon negative electrode material is improved by the fluffy carbon nanotubes and the intertwined filamentary carbon nanotubes grown on the surface of the silicon particles; moreover, the filamentary carbon nanotubes may also function in long-range electric conduction during volume expansion and shrinkage of the silicon negative electrode material, thereby ensuring cycling stability of the corresponding secondary battery.

In any of embodiments, the outer surface of the silicon particles has defects, the defects containing catalyst particles such that roots of the carbon nanotubes grow perpendicular to the surface of the silicon particles. Thus, the carbon nanotubes wrap the surface of the silicon particles, inhibiting volume expansion of the silicon particles and improving conductivity thereof.

In any of embodiments, the fluffy carbon nanotubes have a length of 0.5-2 µm and the filamentary carbon nanotubes have a length of 5-100 µm. Thus, volume expansion of the silicon particles is inhibited and conductivity thereof is improved, thereby improving cycling stability of the secondary battery.

In any of embodiments, the carbon nanotubes have a content of 3 wt% to 6.5 wt% based on the total weight of the silicon negative electrode material. Thus, volume expansion of the silicon particles is inhibited and conductivity thereof is improved, thereby improving cycling stability of the secondary battery.

In any of embodiments, the catalyst particles have a content of 0.5%-2% based on the total weight of the silicon negative electrode material; optionally, the silicon particles have a volume average particle size Dᵥ₅₀ of 4 µm-7 µm, and the catalyst particles have a volume average particle size Dᵥ₅₀ of 2 nm-15 nm. Thus, sufficient carbon nanotubes are grown on the surface of the silicon particles to inhibit volume expansion of the silicon particles and improve conductivity thereof, thereby improving cycling stability of the secondary battery.

In any of embodiments, the silicon negative electrode material has a specific surface area of 5 m²/g to 8 m²/g. Thus, volume expansion of the silicon particles is inhibited and conductivity thereof is improved, thereby improving cycling stability of the secondary battery.

In any of embodiments, the silicon particles are silicon oxide particles, silicon-carbon particles or elemental silicon particles; optionally, the silicon particles are prelithiated silicon oxide particles, silicon-carbon particles or elemental silicon particles. Thus, the silicon particles can be modified by using the carbon nanotubes of the present invention to inhibit volume expansion of the silicon particles and improve conductivity thereof, thereby improving cycling stability of the secondary battery.

In any of embodiments, the catalyst particles are selected from at least one of elemental iron, elemental cobalt, elemental nickel, elemental copper and elemental zinc. Thus, the growth of carbon nanotubes is more effectively catalyzed, and the carbon nanotubes are bonded on the surface of silicon particles, to inhibit volume expansion of the silicon particles and improve conductivity thereof, thereby improving cycling stability of the secondary battery.

A second aspect of the present application further provides a method for preparing a silicon negative electrode material, including the steps of:
1) heating silicon particles in an acidic solution to etch defects on the surface of the silicon particles, followed by centrifugal cleaning;
2) fully mixing the silicon particles obtained in step 1) with a precursor solution for producing catalyst particles, followed by drying, so that a precursor is deposited in the defects of the surface of the silicon negative electrode particles;
3) placing powder obtained in step 2) in a high-temperature furnace to perform a reduction reaction under a protective atmosphere of H₂/Ar, so that the precursor is reduced into catalyst particles, wherein the catalyst particles are at least one of elemental iron, elemental cobalt, elemental nickel, elemental copper and elemental zinc; and
4) introducing a gaseous carbon source into the high-temperature furnace to perform a high-temperature reaction to obtain the silicon negative electrode material finally; wherein
   the silicon negative electrode material comprises silicon particles and carbon nanotubes grown on the surface of the silicon particles, the carbon nanotubes comprise fluffy carbon nanotubes and intertwined filamentary carbon nanotubes, and the silicon particles are wrapped by the fluffy carbon nanotubes and the filamentary carbon nanotubes.

Thus, through the method of the present invention, the silicon negative electrode material of the present invention is obtained by etching the surface of the silicon particles using an acidic solution and then depositing a catalyst precursor, allowing carbon nanotubes of different morphologies to grow on the surface of the silicon particles, thereby inhibiting volume expansion of the silicon particles and improving conductivity thereof, and further improving cycling stability of the secondary battery.

In any of embodiments, step 3) and step 4) may also be performed simultaneously. Thus, precursor reduction and carbon nanotube growth are allowed to be performed simultaneously.

In any of embodiments, in step 1), the acidic solution is an aqueous solution of hydrogen fluoride with a concentration of 1 mol/L-10 mol/L; etching temperature is 50°C-90°C, preferably 80-90°C; and etching time is 50 min-150 min, preferably 70 min-120 min. Thus, after etching, the surface of the silicon particles has pits, which increases roughness of the surface of the silicon particles and further expands the contact area between the silicon particles and a carbon nanotube catalyst.

In any of embodiments, in step 2), the precursor solution for producing catalyst particles is an aqueous solution of iron nitrate, an aqueous solution of nickel nitrate or an aqueous solution of cobalt nitrate with a concentration of 0.1-3 mol/L. Thus, carbon nanotubes as described herein are allowed to be grown on the surface of the silicon particles to inhibit volume expansion of the silicon particles and improve conductivity thereof, thereby improving cycling stability of the secondary battery.

In any of embodiments, in step 2), the method for drying includes spray drying, and drying with stirring; wherein the drying is carried out until moisture content of the obtained powder is less than 1 wt% based on the total weight of the obtained powder. Thus, the catalyst precursor is stably anchored to the pits on the surface of the silicon particles.

In any of embodiments, in step 4), high temperature is 580°C-900°C, preferably 800-850°C, reaction time is 20 min-50 min, and the gaseous carbon source is methane, acetylene or carbon dioxide. Thus, carbon nanotubes with roots grown vertically can be successfully prepared on the silicon particles, to inhibit volume expansion of silicon particles and improve conductivity thereof, thereby improving cycling stability of the secondary battery.

A third aspect of the present application provides a secondary battery, which is characterized by including the silicon negative electrode material of the first aspect of the present invention or a silicon negative electrode material prepared by the method for preparing a silicon negative electrode material of the second aspect of the present invention.

A fourth aspect of the present application provides a battery module including the secondary battery of the third aspect of the present application.

A fifth aspect of the present application provides a battery pack including the battery module of the fourth aspect of the present application.

A sixth aspect of the present application provides an electrical apparatus including at least one selected from the secondary battery of the third aspect of the present application, the battery module of the fourth aspect of the present application, or the battery pack of the fifth aspect of the present application.

Thus, in the present application, volume expansion of the silicon negative electrode material is limited and conductivity of the silicon negative electrode material is improved by the fluffy carbon nanotubes and the intertwined filamentary carbon nanotubes grown on the surface of the silicon particles; moreover, the filamentary carbon nanotubes may also function in long-range electric conduction during volume expansion and shrinkage of the silicon negative electrode material, thereby ensuring cycling stability of the corresponding secondary battery.

### Description of Drawings

Fig. 1 is a scanning electron micrograph of a silicon negative electrode material of Example 1.
Fig. 2 is a scanning electron micrograph of a silicon negative electrode material of Comparative Example 1.
Fig. 3 is a schematic diagram of a secondary battery according to an embodiment of the present application.
Fig. 4 is an exploded view of the secondary battery according to an embodiment of the present application shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of the battery pack according to an embodiment of the present application shown in Fig. 6.
Fig. 8 is a schematic diagram of an electrical apparatus according to an embodiment of the present application in which the secondary battery is used as a power source.

### Description of reference numerals:

1 battery pack; 2 upper box body; 3 lower box body; 4 battery module; 5 secondary battery; 51 case; 52 electrode assembly; and 53 top cover assembly.

### Detailed Description

Hereinafter, embodiments that specifically disclose a silicon negative electrode active material and a method for preparing the same, a secondary battery, a battery module, a battery pack and an electrical apparatus of the present application will be described in detail with reference to the drawings as appropriate. However, unnecessary detailed description will be omitted in some cases. For example, there are cases where detailed descriptions of well-known items and repeated descriptions of actually identical structures are omitted. This is to avoid unnecessarily prolonging the following description, for ease of understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, a method including steps (a) and (b) indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), or steps (a), (c), and (b), or steps (c), (a), and (b), or the like.

Unless otherwise specified, the terms "include" and "comprise" mentioned in the present application are inclusive or may be exclusive. For example, the "include" and "comprise" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

Silicon material is considered to be the most promising future negative electrode material for lithium-ion batteries due to its high theoretical specific capacity and abundant resources. The silicon material has many shortcomings as a negative electrode material for lithium-ion batteries: firstly, as a semiconductor material, silicon has a low conductivity; secondly, during charging and discharging, with intercalation and deintercalation of lithium ions, the silicon material has a great change in volume. This causes negative electrode particles to be easy to crack or the negative electrode material to break away from a binder and detach from a negative electrode plate during use of the silicon negative electrode material, resulting in structural failure and pulverization of the silicon negative electrode material, and causing the loss of electrical contact of silicon active components and damage to the electrode structure. In addition, in the prior art, when the silicon material and graphite are mixed, a specific amount of carbon nanotubes is usually added to a physical mixture to improve cycling performance and reduce expansion. It is well known that carbon nanotubes and graphite are carbon materials with high affinity, so during physically mixing, most of the carbon nanotubes are agglomerated to the graphite, resulting in basically no carbon nanotubes on the silicon material, and thus performance of the battery will not be significantly improved. Therefore, the present invention provides a silicon negative electrode material and a method for preparing the same in response to the above problems, aiming to solve the technical problems of poor conductivity and high volume expansion rate during use of the existing silicon negative electrode material, and agglomeration of carbon nanotubes on graphite when the carbon nanotubes are physically added to a graphite and silicon electrode system.

### Silicon negative electrode material

In an embodiment of the present application, the present application provides a silicon negative electrode material characterized by comprising silicon particles and carbon nanotubes grown on the surface of the silicon particles, where the carbon nanotubes comprise fluffy carbon nanotubes and intertwined filamentary carbon nanotubes, and the silicon particles are wrapped by the fluffy carbon nanotubes and the filamentary carbon nanotubes.

Although the mechanism is not yet clear, the present applicant made an unexpected discovery: in the present application, volume expansion of the silicon negative electrode material is limited and conductivity of the silicon negative electrode material is improved by the fluffy carbon nanotubes and the intertwined filamentary carbon nanotubes grown on the surface of the silicon particles; moreover, the filamentary carbon nanotubes may also function in long-range conduction during volume expansion and shrinkage of the silicon negative electrode material, thereby ensuring cycling stability of the corresponding secondary battery.

In some embodiments, some or all of the fluffy carbon nanotubes may be intertwined.

In some embodiments, the outer surface of the silicon particles has defects, the defects containing catalyst particles such that roots of the carbon nanotubes grow perpendicular to the surface of the silicon particles. Thus, the carbon nanotubes wrap the surface of the silicon particles, inhibiting volume expansion of the silicon particles and improving conductivity thereof.

In some embodiments, the fluffy carbon nanotubes have a length of 0.5-2 µm, preferably 1.0-1.5 µm, and the filamentary carbon nanotubes have a length of 5-100 µm, preferably 20-95 µm. Thus, volume expansion of the silicon particles is inhibited and conductivity thereof is improved, thereby improving cycling stability of the secondary battery.

In some embodiments, the carbon nanotubes have a content of 3 wt% to 6.5 wt%, preferably 4 wt% to 5 wt% based on the total weight of the silicon negative electrode material. In a case that the carbon nanotubes have a content of >6.5%, cycling performance of the battery is reduced because the carbon nanotubes consume part of lithium ions during application of the battery. In a case that the carbon nanotubes have a content of <3%, due to the low number, carbon nanotubes are limited in effect of improving conductivity and inhibiting volume expansion of the silicon negative electrode material.

In some embodiments, the catalyst particles have a content of 0.5%-2%, preferably 1.0-1.5% based on the total weight of the silicon negative electrode material; optionally, the silicon particles have a volume average particle size Dᵥ₅₀ of 4 µm-7 µm, preferably 4-6 µm, and the catalyst particles have a volume average particle size Dᵥ₅₀ of 2 nm-15 nm, preferably 2-5 nm. Thus, sufficient carbon nanotubes are grown on the surface of the silicon particles to inhibit volume expansion of the silicon particles and improve conductivity thereof, thereby improving cycling stability of the secondary battery.

In some embodiments, the silicon negative electrode material has a specific surface area of 5 m²/g to 8 m²/g, preferably 5-7 m²/g. When the specific surface area of the said silicon negative electrode material is of >8m²/g, because the specific surface area of carbon nanotubes is too large, there are too many active sites, and more side reactions occur during application of the battery, resulting in poorer stability of the material, and accordingly, the specific surface area of this material is preferably of ≤8m²/g.

In some embodiments, the silicon particles are silicon oxide particles, silicon-carbon particles or elemental silicon particles; optionally, the silicon particles are prelithiated silicon oxide particles, silicon-carbon particles or elemental silicon particles. Thus, the silicon particles can be modified by using the carbon nanotubes of the present invention to inhibit volume expansion of the silicon particles and improve conductivity thereof, thereby improving cycling stability of the secondary battery.

In some embodiments, the silicon particles are silicon oxide particles; the prelithiated silicon oxide particles have a lithium content of <4 wt%. When the lithium content of the prelithiated silicon oxide particles is ≥ 4%, too much lithium precipitates out due to high temperature growth of carbon nanotubes, which affects the structure of the prelithiated silicon oxide itself.

In some embodiments, the catalyst particles are selected from at least one of elemental iron, elemental cobalt, elemental nickel, elemental copper and elemental zinc, preferably selected from at least one of iron, cobalt and nickel. Thus, the growth of carbon nanotubes is more effectively catalyzed, and the carbon nanotubes are bonded on the surface of silicon particles, to inhibit volume expansion of the silicon particles and improve conductivity thereof, thereby improving cycling stability of the secondary battery.

A second aspect of the present application further provides a method for preparing a silicon negative electrode material, including the steps of
1) heating silicon particles in an acidic solution to etch defects on the surface of the silicon particles, followed by centrifugal cleaning;
2) fully mixing the silicon particles obtained in step 1) with a precursor solution for producing catalyst particles, followed by drying, so that a precursor is deposited in the defects of the surface of the silicon negative electrode particles;
3) placing powder obtained in step 2) in a high-temperature furnace to perform a reduction reaction under a protective atmosphere of H₂/Ar, so that the precursor is reduced into catalyst particles, wherein the catalyst particles are at least one of elemental iron, elemental cobalt, elemental nickel, elemental copper and elemental zinc; and
4) introducing a gaseous carbon source into the high-temperature furnace to perform a high-temperature reaction to obtain the silicon negative electrode material finally; wherein
   the silicon negative electrode material comprises silicon particles and carbon nanotubes grown on the surface of the silicon particles, the carbon nanotubes comprise fluffy carbon nanotubes and intertwined filamentary carbon nanotubes, and the silicon particles are wrapped by the fluffy carbon nanotubes and the filamentary carbon nanotubes.

Thus, through the method of the present invention, the silicon negative electrode material of the present invention is obtained by etching the surface of the silicon particles using an acidic solution and then depositing a catalyst precursor, allowing carbon nanotubes of different morphologies to grow on the surface of the silicon particles, thereby inhibiting volume expansion of the silicon particles and improving conductivity thereof, and further improving cycling stability of the secondary battery.

In some embodiments, step 3) and step 4) may also be performed simultaneously. Thus, precursor reduction and carbon nanotube growth are allowed to be performed simultaneously.

In some embodiments, in step 1), the acidic solution is an aqueous solution of hydrogen fluoride with a concentration of 1 mol/L-10 mol/L; etching temperature is 50°C-90°C, preferably 80-90°C; and etching time is 50 min-150 min, preferably 70 min-120 min. Thus, after etching, the surface of the silicon particles has pits, which increases roughness of the surface of the silicon particles and further expands the contact area between the silicon particles and a carbon nanotube catalyst.

In some embodiments, in step 2), the precursor solution for producing catalyst particles is an aqueous solution of iron nitrate, an aqueous solution of nickel nitrate or an aqueous solution of cobalt nitrate with a concentration of 0.1-3 mol/L. Thus, carbon nanotubes as described herein are allowed to be grown on the surface of the silicon particles to inhibit volume expansion of the silicon particles and improve conductivity thereof, thereby improving cycling stability of the secondary battery.

In some embodiments, in step 2), the method for drying includes spray drying, and drying with stirring; wherein the drying is carried out until moisture content of the obtained powder is less than 1 wt%, preferably less than 0.5 wt% based on the total weight of the obtained powder. Thus, the catalyst may be stably anchored to the pits on the surface of the silicon particles.

In some embodiments, in step 4), high temperature is 580°C-900°C, preferably 800-850°C, reaction time is 20 min-50 min, and the gaseous carbon source is methane, acetylene or carbon dioxide. Thus, carbon nanotubes with roots grown vertically can be successfully prepared on the silicon particles, to inhibit volume expansion of silicon particles and improve conductivity thereof, thereby improving cycling stability of the secondary battery.

In some embodiments, reduction temperature in step 3) may be the same or different from the high temperature in step 4). Generally, the reduction temperature in step 3) is 580°C-900°C, preferably 580-620°C, and reduction time is 20 min-50 min, preferably 20-30 min.

Moreover, the secondary battery, battery module, battery pack and electrical apparatus of the present application will be described hereafter with appropriate reference to the drawings.

In an embodiment of the present application, a secondary battery is provided.

Generally, the secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is disposed between the positive electrode plate and the negative electrode plate, and mainly functions to prevent a short circuit between the positive electrode and the negative electrode while allowing ions to pass through.

### [Positive electrode plate]

The positive electrode plate includes a positive electrode current collector and a positive electrode film layer arranged on at least one surface of the positive electrode current collector, and the positive electrode film layer includes the positive electrode active material of the first aspect of the present application.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by dispersing the components for preparing the positive electrode plate, for example, the positive electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and other procedures, to obtain the positive electrode plate.

### [Negative electrode plate]

The negative electrode plate includes a negative electrode current collector and a negative electrode film layer arranged on at least one surface of the negative electrode current collector. The negative electrode film layer includes a negative electrode active material.

As an example, the negative electrode current collector has two opposite surfaces in its own thickness direction, and the negative electrode film layer is disposed on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode active material refers to the silicon negative electrode material of the present invention.

In some embodiments, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other auxiliaries, for example, a thickener (e.g., sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in the solvent (for example, deionized water) to form a negative electrode slurry; and coating the negative electrode slurry on the negative electrode current collector, followed by drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally includes an additive. For example, the additive may include a negative electrode film-forming additive and a positive electrode film-forming additive, and may also include additives that can improve certain battery properties, such as additives that improve battery overcharge performance, additives that improve battery high or low temperature performance, and the like.

### [Separator]

In some embodiments, the secondary battery further includes a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft package, such as a pouch. The pouch may be made of a plastic, and examples of the plastic include polypropylene, polybutylene terephthalate and polybutylene succinate.

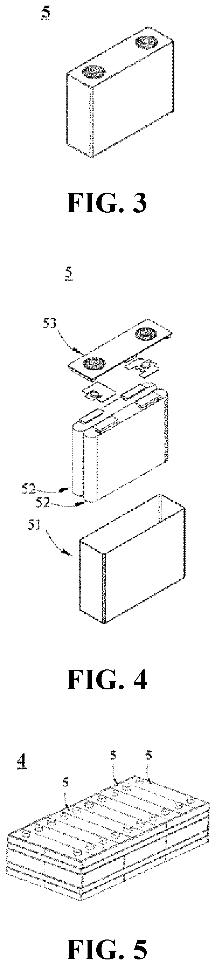

The present application has no particular limitation on the shape of the secondary battery, which can be cylindrical, square or any other shape. For example, Fig. 3 shows a secondary battery 5 with a square structure as an example.

In some embodiments, referring to Fig. 4, the outer package may include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 is capable of covering the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the secondary battery 5 may be one or more, which may be selected by those skilled in the art according to specific actual requirements.

In some embodiments, the secondary batteries may be assembled into a battery module, the number of the secondary batteries included in the battery module may be one or more, and the specific number can be selected by those skilled in the art according to the application and capacity of the battery module.

Fig. 5 shows a battery module 4 as an example. Referring to Fig. 5, in the battery module 4, multiple secondary batteries 5 may be sequentially arranged along a length direction of the battery module 4. Of course, any other arrangement is also possible. The plurality of secondary batteries 5 may further be fixed by fasteners.

Optionally, the battery module 4 may further include a shell having an accommodating space, in which the plurality of secondary batteries 5 are accommodated.

In some embodiments, the battery module may further be assembled into a battery pack, the number of battery modules included in the battery pack may be one or more, and the specific number can be selected by those skilled in the art according to the application and capacity of the battery pack.

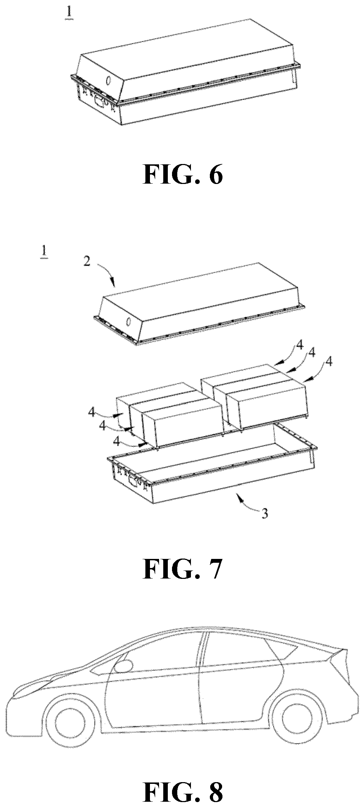

Figs. 6 and 7 show a battery pack 1 as an example. Referring to Figs. 6 and 7, the battery pack 1 may include a battery box and multiple battery modules 4 disposed in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

In addition, the present application further provides an electrical apparatus, and the electrical apparatus includes at least one of the secondary battery, the battery module, or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 8 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are illustrative and only used for explaining the present application, and cannot be construed as limitations on the present application. Where specific techniques or conditions are not specified in the examples, the techniques or conditions described in the literatures of the art or the product specifications are followed. Where manufacturers are not specified, the reagents or instruments used are conventional products and are commercially available.

### I. Preparation examples

### Example 1

(1) 30 g of silicon oxide particles with a particle size of 5 microns were first put into a 5 mol/L HF solution for etching for 70 min, and cleaned with deionized water.
(2) Silicon particles obtained in step 1) and 1 mol/L ferric nitrate solution were mixed well and uniformly, followed by spray drying.
(3) Powder obtained in step 2) was put into a high-temperature furnace and heated up to 580°C at 5°C/min under a protective atmosphere of H₂/Ar, followed by holding temperature for 30 min.
(4) Methane gas was introduced into the high-temperature furnace, followed by raising temperature to 800 °C, holding the temperature for 30 min and cooling to room temperature to obtain a silicon negative electrode material.

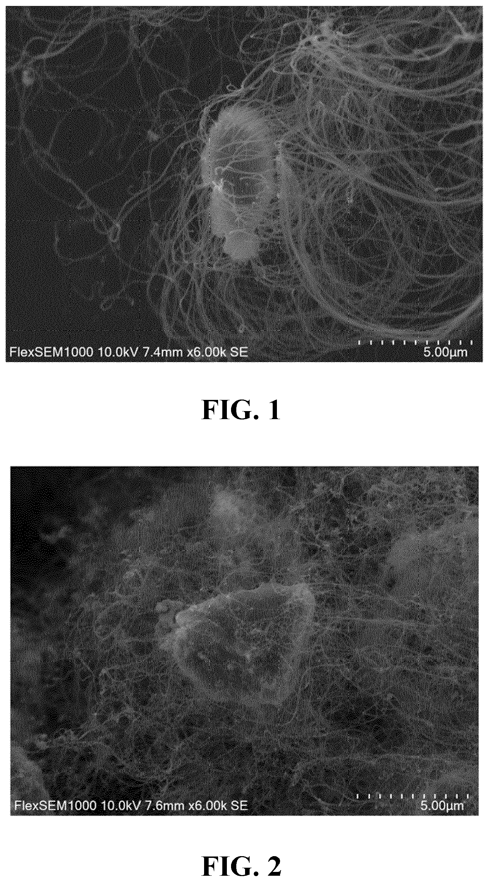

The prepared silicon negative electrode material has a carbon nanotube content of 4 wt%; the fluffy carbon nanotubes have a length of 1.5 um, and the filamentary carbon nanotubes have a length of about 30 um. A scanning electron micrograph thereof is referred to Fig.1.

The silicon negative electrode material has a specific surface area of 6 m²/g.

All parameters are summarized in Table 1.

### Examples 2-20

The steps of Example 1 were repeated, with the following differences: varying the etching time and temperature; the type and content of the catalyst precursor used in step 2); the carbon source, temperature and holding time in step 4); and the prelithium amount of the silicon particles used.

All parameters are summarized in Table 1.

### Example 21

The steps of Example 1 were repeated, with the following differences: steps 3) and 4) were carried out simultaneously, i.e., powder obtained in step 2) was put into a high-temperature furnace, and methane gas was introduced into the high-temperature furnace under a protective atmosphere of H₂/Ar, followed by raising temperature to 760°C, holding the temperature for 30 min, and cooling to room temperature to obtain a silicon negative electrode material.

All parameters are summarized in Table 1.

### Comparative Example 1

(1) 30 g of silicon oxide particles with a particle size of 5 µm and 1 mol/L ferric nitrate solution were first mixed well and then dried by spray drying.
(2) Powder obtained in step 1) was then placed into a high-temperature furnace and heated up to 580 °C at 5 °C/min under a protective atmosphere of H₂/Ar, and held for 30 min.
(3) Methane gas was introduced into the high-temperature furnace, followed by raising temperature to 800°C, holding the temperature for 30 min and cooling to room temperature to obtain a silicon negative electrode material.

A scanning electron micrograph of the prepared silicon negative electrode material is referred to Fig. 2.

See Table 1 for relevant parameters.

**Table 1: Relevant parameters of examples and comparative example**

| Example No.: | Prelithium amount/% | Etching | | Precursor | | Step 3) | | Step 4) | | | Percentage of carbon nanotubes | Length of fluffy carbon nanotubes | Length of filamentary carbon nanotubes | Material specific surface area |
|---|---|---|---|---|---|---|---|---|---|---|---|---|---|---|
| | | Time/ min | Temperature /°C | Type | Concentration mol/L | Temperature °C | Holding time min | Temperature °C | Holding time min | Carbon source | | | | |
| 1 | Do not contain | 70 | 80 | Ferric nitrate | 1 | 580 | 30 | 800 | 30 | Acetylene | 4% | 1.5 um | 30 um | 6 m²/g |
| 2 | Do not contain | 100 | 80 | Ferric nitrate | 1 | 580 | 30 | 800 | 30 | Acetylene | 4.5% | 1.3 um | 30 um | 6.3 m²/g |
| 3 | Do not contain | 120 | 80 | Ferric nitrate | 1 | 580 | 30 | 800 | 30 | Acetylene | 5% | 1.0 um | 30 um | 6.5 m²/g |
| 4 | Do not contain | 70 | 85 | Ferric nitrate | 1 | 580 | 30 | 800 | 30 | Acetylene | 4.2% | 1.4 um | 30 um | 6.1 m²/g |
| 5 | Do not contain | 70 | 90 | Ferric nitrate | 1 | 580 | 30 | 800 | 30 | Acetylene | 4.6% | 1.1 um | 30 um | 6.4 m²/g |
| 6 | 2% | 70 | 80 | Ferric nitrate | 1 | 580 | 30 | 800 | 30 | Acetylene | 4.5% | 1.5 um | 30 um | 7.0 m²/g |
| 7 | 3% | 70 | 80 | Ferric nitrate | 1 | 580 | 30 | 800 | 30 | Acetylene | 5% | 1.5 um | 30 um | 7.3 m²/g |
| 8 | Do not contain | 70 | 80 | Cobalt nitrate | 1 | 580 | 30 | 800 | 30 | Acetylene | 4% | 1.2 um | 35 um | 5.1 m²/g |
| 9 | Do not contain | 70 | 80 | Nickel nitrate | 1 | 580 | 30 | 800 | 30 | Acetylene | 4.5% | 1.0 um | 35 um | 5.5 m²/g |
| 10 | Do not contain | 70 | 80 | Ferric nitrate | 2 | 580 | 30 | 800 | 30 | Acetylene | 5.6% | 1.2 um | 41 um | 6.7 m²/g |
| 11 | Do not contain | 70 | 80 | Ferric nitrate | 3 | 580 | 30 | 800 | 30 | Acetylene | 5.8% | 1.4 um | 45 um | 7.5 m²/g |
| 12 | Do not contain | 70 | 80 | Ferric nitrate | 1 | 600 | 30 | 800 | 30 | Acetylene | 5.7% | 1.3 um | 62 um | 7.1 m²/g |
| 13 | Do not contain | 70 | 80 | Ferric nitrate | 1 | 620 | 30 | 800 | 30 | Acetylene | 6.0% | 1.5 um | 77 um | 7.8 m²/g |
| 14 | Do not contain | 70 | 80 | Ferric nitrate | 1 | 580 | 40 | 800 | 30 | Acetylene | 5.6% | 1.5 um | 58 um | 6.1 m²/g |
| 15 | Do not contain | 70 | 80 | Ferric nitrate | 1 | 580 | 60 | 800 | 30 | Acetylene | 6.2% | 1.5 um | 67 um | 6.9 m²/g |
| 16 | Do not contain | 70 | 80 | Ferric nitrate | 1 | 580 | 30 | 820 | 30 | Acetylene | 5.5% | 1.4 um | 42 um | 62 m²/g |
| 17 | Do not contain | 70 | 80 | Ferric nitrate | 1 | 580 | 30 | 850 | 30 | Acetylene | 6.1% | 1.5 um | 48 um | 6.6 m²/g |
| 18 | Do not contain | 70 | 80 | Ferric nitrate | 1 | 580 | 30 | 800 | 40 | Acetylene | 4.2% | 1.3 um | 34 um | 6.4 m²/g |
| 19 | Do not contain | 70 | 80 | Ferric nitrate | 1 | 580 | 30 | 800 | 50 | Acetylene | 4.6% | 1.5 um | 39 um | 6.7 m²/g |
| 20 | Do not contain | 70 | 80 | Ferric nitrate | 1 | 580 | 30 | 800 | 30 | Methane | 6.4% | 1.3 um | 95 um | 7.9 m²/g |
| 21 | Do not contain | 70 | 80 | Ferric nitrate | 1 | Perform reduction and carbon tube growth at the temperature of step 4 | | | | | 4.0% | 1.5 um | 30 um | 60 m²/g |
| Comparative Example 1 | Do not contain | Skip this step | | Ferric nitrate | 1 | 580 | 30 | 800 | 30 | Acetylene | 7.0% | 20 um | 30 um | 10 m²/g |

### II. Application examples

### I. Preparation of negative electrode plate

The silicon negative electrode material prepared from each example and comparative example was mixed with graphite, carbon black, sodium methyl cellulose, and SBR in a weight ratio of 13:83.5:1:1:1:1.5 to prepare a slurry, the slurry was coated on a copper foil, and then dried for 12h in a vacuum drying oven at 105°C to obtain the negative electrode plate. The negative electrode plate was subjected to performance tests, and test results are summarized in Table 2.

### II. Preparation of secondary battery

A ternary material NCM811, a conductive agent carbon black, and a binder polyvinylidene fluoride (PVDF) were mixed in a weight ratio of 97.5:1:1.5 to prepare a polyvinylidene fluoride slurry, the positive electrode slurry was then uniformly coated on a positive electrode current collector to obtain a positive electrode plate. Next, the positive electrode plate, a separator, and the negative electrode plate were made into a stacked cell through cold pressing, slitting, assembling, priming, formation and other processes, and the cell was subjected to room-temperature cycling performance evaluation by charging and discharging.

### 1. Cycling performance test of secondary battery

(1) Test actual capacity: Discharge a battery at 1C to 2.5V, charge it with a constant current of 1/3C to 4.25V, charge it with a constant voltage to 0.05C, and finally discharge it at 1C to 2.5V and test actual capacity and denoted it as Cn.
(2) Perform cycle test: Charge the battery with a constant current of 1C to 4.25V, then charge it with a constant voltage to 0.05C, and finally discharge it at 1C to 2.5V.
(3) Repeat step (2) continuously until capacity retention rate was less than 0.8Cn, end the test, and record the number of repeated cycles.

### 2. Volume expansion rate at 100% SOC (state of charge of lithium battery) of negative electrode plate

(1) Test a thickness of the negative electrode plate: Test the thickness of the negative electrode plate before assembling of the battery.
(2) Test actual capacity: Discharge a battery at 1C to 2.5V, charge it with a constant current of 1/3C to 4.25V, charge it with a constant voltage to 0.05C, and finally discharge it at 1C to 2.5V and test actual capacity and denoted it as Cn.
(3) Full charge: Charge the battery with a constant current of 1C to 4.25V and then charge it with a constant voltage to 0.05C.
(4) Test a thickness of the full-charged negative electrode plate: Remove the full-charged battery in (3) and test the thickness of the negative electrode plate again.
(5) Calculate volume expansion rate at 100% SOC = thickness change rate of negative electrode plate before and after full charge.

### 3. Direct-current internal resistance (DCR) of negative electrode plate (room temperature 25°C of 50%SOC)

(1) Test actual capacity: Discharge a battery at 1C to 2.5V, charge it with a constant current of 1/3C to 4.25V, charge it with a constant voltage to 0.05C, and finally discharge it at 1C to 2.5V and test actual capacity and denoted it as Cn.
(2) Test DCR of 50% SOC: Charge the battery with a constant current of 1c to 4.25V and charge it to 0.05C with a constant voltage; discharge it at 1/3C to 0.5Cn Ah, discharge it with a constant current I, and record a voltage change between the start of discharging and the end of discharging as U.
(3) DCR of the battery is U/I.

**Table 2: Performance test results of examples and comparative example**

| Example No.: | Negative electrode plate | | Battery |
|---|---|---|---|
| | DCR (50% SOC) | Volume expansion rate | Cycle times at room temperature@80% |
| 1 | 450 mΩ | 33.4% | 950 |
| 2 | 483 mΩ | 33.6% | 941 |
| 3 | 496 mΩ | 34.1% | 928 |
| 4 | 485 mΩ | 33.5% | 948 |
| 5 | 498 mΩ | 34.3% | 932 |
| 6 | 446 mΩ | 33.2% | 955 |
| 7 | 438 mΩ | 33.1% | 959 |
| 8 | 457 mΩ | 33.5% | 960 |
| 9 | 446 mΩ | 33.4% | 943 |
| 10 | 435 mΩ | 33.1% | 924 |
| 11 | 469 mΩ | 33.1% | 899 |
| 12 | 432 mΩ | 34.4% | 870 |
| 13 | 426 mΩ | 34.6% | 865 |
| 14 | 441 mΩ | 34.6% | 927 |
| 15 | 437 mΩ | 33.9% | 898 |
| 16 | 430 mΩ | 33.8% | 975 |
| 17 | 418 mΩ | 34.6% | 947 |
| 18 | 447 mΩ | 32.7% | 985 |
| 19 | 418 mΩ | 33.0% | 937 |
| 20 | 458 mΩ | 33.1% | 958 |
| 21 | 460 mΩ | 33.5% | 956 |
| Comparative Example 1 | 518 mΩ | 36.5% | 825 |

Based on the above results, it can be seen that in Examples 1-21, good effects are achieved in inhibiting the expansion and DCR of 50% SOC of the silicon negative electrode plate. Possible reasons for this are that carbon nanotubes can be stably and firmly grown on a silicon negative electrode, the carbon nanotubes do not fall off from the silicon negative electrode during homogenization stirring of the negative electrode, part of the carbon nanotubes wrapped around the silicon negative electrode inhibits expansion of the silicon negative electrode, and filamentary carbon nanotubes play a role of long-range conduction to reduce internal resistance of the electrode plate, thereby improving performance.

In contrast, in Comparative Example 1, no effective improvement is achieved in inhibiting the expansion and DCR of the silicon negative electrode. Possible reasons are that a carbon nanotube catalyst cannot form an effective bonding relationship with the silicon negative electrode, and the carbon nanotubes cannot grow stably on the silicon negative electrode and may fall off from the silicon negative electrode during preparation of the negative electrode plate, thus resulting in the carbon nanotubes not being completely wrapped, and leading to a failure in inhibiting the expansion of the silicon negative electrode.

It should be noted that the present application is not limited to the above embodiments. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A silicon negative electrode material, comprising silicon particles and carbon nanotubes grown on the surface of the silicon particles, wherein
the carbon nanotubes comprise fluffy carbon nanotubes and intertwined filamentary carbon nanotubes, and the silicon particles are wrapped by the fluffy carbon nanotubes and the filamentary carbon nanotubes.

2. The silicon negative electrode material of claim 1, wherein the outer surface of the silicon particles has defects, the defects containing catalyst particles such that roots of the carbon nanotubes grow perpendicular to the surface of the silicon particles.

3. The silicon negative electrode material of claim 1 or 2, wherein
the fluffy carbon nanotubes have a length of 0.5-2 µm and the filamentary carbon nanotubes have a length of 5-100 µm.

4. The silicon negative electrode material of any one of claims 1-3, wherein
the carbon nanotubes have a content of 3 wt% to 6.5 wt% based on the total weight of the silicon negative electrode material.

5. The silicon negative electrode material of any one of claims 2-4, wherein the catalyst particles have a content of 0.5%-2% based on the total weight of the silicon negative electrode material; optionally, the silicon particles have a volume average particle size Dᵥ₅₀ of 4 µm-7 µm, and the catalyst particles have a volume average particle size Dᵥ₅₀ of 2 nm-15 nm.

6. The silicon negative electrode material of any one of claims 1-5, wherein the silicon negative electrode material has a specific surface area of 5m²/g- 8m²/g.

7. The silicon negative electrode material of any one of claims 1-6, wherein the silicon particles are silicon oxide particles, silicon-carbon particles or elemental silicon particles; optionally, the silicon particles are prelithiated silicon oxide particles, silicon-carbon particles or elemental silicon particles.

8. The silicon negative electrode material of any one of claims 2-7, wherein the catalyst particles are selected from at least one of elemental iron, elemental cobalt, elemental nickel, elemental copper and elemental zinc.

9. A method for preparing a silicon negative electrode material, comprising the steps of:
1) heating silicon particles in an acidic solution to etch defects on the surface of the silicon particles, followed by centrifugal cleaning;
2) fully mixing the silicon particles obtained in step 1) with a precursor solution for producing catalyst particles, followed by drying, so that a precursor is deposited in the defects of the surface of the silicon negative electrode particles;
3) placing powder obtained in step 2) in a high-temperature furnace to perform a reduction reaction under a protective atmosphere of H₂/Ar, so that the precursor is reduced into catalyst particles, wherein the catalyst particles are at least one of elemental iron, elemental cobalt, elemental nickel, elemental copper and elemental zinc; and
4) introducing a gaseous carbon source into the high-temperature furnace to perform a high-temperature reaction to obtain the silicon negative electrode material finally; wherein
the silicon negative electrode material comprises silicon particles and carbon nanotubes grown on the surface of the silicon particles, the carbon nanotubes comprise fluffy carbon nanotubes and intertwined filamentary carbon nanotubes, and the silicon particles are wrapped by the fluffy carbon nanotubes and the filamentary carbon nanotubes.

10. The method of claim 9, wherein step 3) and step 4) are allowed to be performed simultaneously.

11. The method of claim 9 or 10, wherein in step 1), the acidic solution is an aqueous solution of hydrogen fluoride with a concentration of 1 mol/L-10 mol/L; etching temperature is 50°C-90°C, preferably 80-90°C; and etching time is 50 min-150 min, preferably 70 min-120 min.

12. The method of any one of claims 9-11, wherein in step 2), the precursor solution for producing catalyst particles is an aqueous solution of iron nitrate, an aqueous solution of nickel nitrate or an aqueous solution of cobalt nitrate with a concentration of 0.1-3 mol/L.

13. The method of any one of claims 9-12, wherein in step 2), the method for drying comprises spray drying, and drying with stirring; wherein the drying is carried out until moisture content of the obtained powder is less than 1 wt% based on the total weight of the obtained powder.

14. The method of any one of claims 9-13, wherein in step 4), high temperature is 580°C-900°C, preferably 800-850°C, reaction time is 20 min-50 min, and the gaseous carbon source is methane, acetylene or carbon dioxide.

15. A secondary battery, comprising the silicon negative electrode material of any one of claims 1-8 or the silicon negative electrode material prepared by the method for preparing a silicon negative electrode material of any one of claims 9-14.

16. A battery module, comprising the secondary battery of claim 15.

17. A battery pack, comprising the battery module of claim 16.

18. An electrical apparatus, comprising at least one of the secondary battery of claim 15, the battery module of claim 16, or the battery pack of claim 17.
